# EUROPEAN PATENT SPECIFICATION

(11) **EP 3 891 056 B1**
(45) Date of publication and mention of the grant of the patent: **08.06.2022**
(21) Application number: 19832198.6
(22) Date of filing: 02.12.2019
(51) Int. Cl.: B62J 6/20, B62J 27/00, G01S 13/74, G01S 13/93

(54) **A SADDLE RIDING TYPE VEHICLE COMPRISING A COLLISION RISK REDUCTION SYSTEM**
SATTELFAHRZEUG MIT EINEM SYSTEM ZUR MINIMIERUNG DES KOLLISIONSRISIKOS
VÉHICULE DE TYPE À SELLE COMPRENANT UN SYSTÈME DE RÉDUCTION DE RISQUE DE COLLISION

(30) Priority: 07.12.2018 IT 201800010894
(43) Date of publication of application: 13.10.2021
(73) Proprietor: Piaggio & C. S.P.A., 56025 Pontedera Pisa (IT)
(72) Inventor: SANTUCCI, Mario Donato, 56025 Pontedera (Pisa) (IT); D'ARIA, Davide, 56025 Pontedera (Pisa) (IT)
(74) Representative: Carangelo, Pierluigi
(86) International application number: PCT/IB2019/060348
(87) International publication number: WO 2020/115632

(56) References cited:
- DE-A1-102014 114 702
- FR-A1- 2 928 482
- JP-A- 2016 075 569
- US-A1- 2015 029 050
- US-A1- 2016 299 224
- Kai-Uwe Schmitt: "Untersuchung der Radar-Sichtbarkeit von Zweirädern" In: "Untersuchung der Radar-Sichtbarkeit von Zweirädern", 13 October 2017 (2017-10-13), AGU Zürich, XP055609570, the whole document

## Description

### TECHNICAL FIELD OF THE INVENTION

The present invention relates to the technical field of land transport vehicles and concerns in particular a saddle riding vehicle comprising a collision risk reduction system.

### BACKGROUND OF THE INVENTION

Collision prevention or collision risk reduction systems using radar technologies are currently used in land transport vehicles, such as automobiles. For example, it is known to equip land transport vehicles with short-, medium- and long-range onboard radar systems. These onboard radar systems are also called automotive radar and currently operate in the 76-81 GHz band, or in the 76-77 GHz band, and are generally FMCW (Frequency Modulated Continuous Wave) type radars.

Short-range onboard radar systems include, for example, radar-based systems known as blind spot detection, adapted to detect and signal to the driver of the vehicle the presence of other vehicles in areas of the so-called blind spot, which are located at rear positions and at an angle relative to the vehicle and are generally difficult for the driver to see through the rear-view mirrors. The range of these radars is limited to a few dozen meters, for example limited to 30 meters.

Medium-range onboard radar systems include systems called Rear Collision Warning systems. An example of such systems is described in patent US6831572B2. Rear Collision Warning systems are configured to warn the driver of a vehicle of the risk of collision with a following vehicle, for example to signal a collision risk. The typical range of these radar systems is approximately 150 meters.

Long-range onboard radar systems include, for example, Adaptive Cruise Control (ACC) systems, which allow the cruising speed of a vehicle to be controlled, helping the driver to maintain a safe distance from the vehicles in front of him and to warn him if action is required. An ACC system uses a radar sensor that detects moving objects in front of the vehicle in the same lane. The ACC keeps the vehicle's set speed constant until the presence of other vehicles is detected. If a vehicle is detected that is moving more slowly, the ACC will reduce motor power and, if necessary, activate the brake system to maintain the set safety distance. If an action by the driver is required to maintain the set distance, a distance alarm is generated. The typical range of these radar systems is approximately 250 meters.

It has been observed that the aforesaid onboard radar systems of the prior art, although technologically advanced and widely used, under certain conditions do not allow a timely and effective identification of narrow-profile vehicles, such as motorcycles or in general so-called saddle riding type vehicles. This may be due to several factors. Firstly, motorcycles, as compared to passenger cars, have a relatively limited equivalent radar cross section under certain conditions, so that they may not be detected by onboard radar systems. The equivalent radar cross section is a measurement of the reflection efficiency of a specific target as a function of the direction of arrival of the incident electromagnetic radiation produced by the radar devices. A failure of a motorcycle to be detected by an onboard radar system of another vehicle occurs, for example, when a motorcycle is travelling at the outer edges of the lane, or when a motorcycle is travelling parallel to another dominant target such as a van or an automobile, etc. Under certain conditions, therefore, the risk of a vehicle colliding with a motorcycle, even if it is fitted with an onboard radar system, is relatively high. This exposes the motorcycle and the occupants thereof to a serious collision risk. A motorcycle (saddle riding type vehicle) according to the preamble of claim 1 is shown in the document JP2016-75569A.

The object of the present description is to provide a saddle riding type vehicle which is capable of overcoming at least some of the drawbacks described above with respect to vehicles of the prior art, in particular which is capable of reducing the risk of collision by another vehicle equipped with automotive radar.

This is achieved by means of a saddle riding type vehicle as generally defined in the accompanying claim 1. Preferred and advantageous embodiments of the aforesaid vehicle are defined in the accompanying dependent claims.

The invention will be better understood by the following detailed description of the particular embodiments thereof made by way of example and, therefore, in no way limiting, with reference to the accompanying drawings briefly described below.

### BRIEF DESCRIPTION OF THE DRAWINGS

Figure 1 shows a side plan view of an illustrative, non-limiting embodiment of a saddle riding type vehicle comprising a collision risk reduction system, also known as a collision avoidance system.
Figure 2 shows a plan view from above of the saddle riding type vehicle of Figure 1.
Figure 3 shows a rear plan view of the saddle riding type vehicle in Figure 1.
Figure 4 shows a functional block diagram as an example of the collision avoidance system of the vehicle shown in Figure 1 in accordance with a first embodiment.
Figure 5 shows a functional block diagram showing the collision avoidance system of the vehicle in Figure 1 in accordance with a second embodiment.
Figure 6 shows a functional block diagram as an example of the collision avoidance system of the vehicle shown in Figure 1 in accordance with a third embodiment.
Figure 7 shows a functional block diagram showing the collision avoidance system of the vehicle in Figure 1 in accordance with a fourth embodiment.

### DETAILED DESCRIPTION

In the accompanying figures, identical or similar elements have been indicated at the same numerical references.

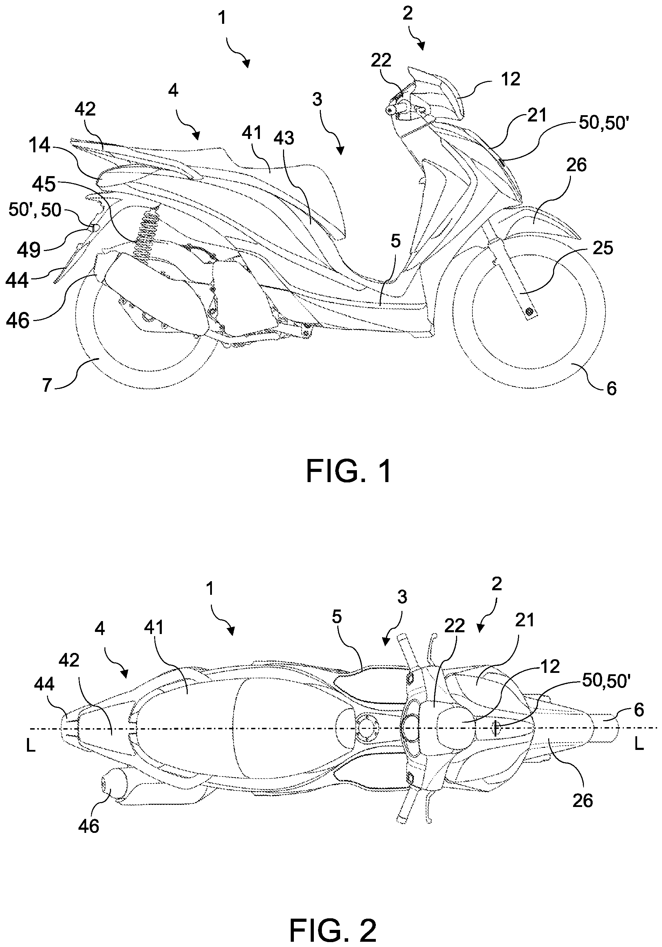

The accompanying Figures 1-3 show an embodiment of a saddle riding type vehicle 1 that in the particular example represented is realized, without introducing any limitation, as a two-wheeled motorcycle and in particular a two-wheeled scooter, having a front wheel 6 and a rear wheel 7.

Hereinafter, the present description will refer to a generic motorcycle 1, meaning that the description of what follows is generally applicable to any type of saddle riding vehicle, preferably of UNECE category "L", comprising:
- a main body 2,3,4;
- at least two wheels 6,7 constrained to the main body 2,3,4;
- a motor 8, for example a thermal or electric or hybrid drive motor, attached to the main body 2,3,4 and operationally connected directly or indirectly to at least one of the two wheels 6,7.

The main body 2,3,4 of the motorcycle 1 extends along a longitudinal axis L-L, which is parallel to the axis of travel of the motorcycle 1, and has a front part 2, a tail part 4 and a central part 3 interposed between the front part 2 and the tail part 4. The central part 3 comprises in the example a footboard 5.

Expediently, the motorcycle 1 comprises a riding seat 41 and a support portion 43 of the riding seat 41, and the footboard 5 connects the support portion 43 of the riding seat 41 to the front part 2 of the motorcycle 1.

In the example, the front part 2 comprises a front shield 21, a steering handlebar 22, a front wheel 6, a front fender 26, a front suspension 25.

In the example, the tail part 4, comprises a luggage rack 42, a rear suspension 45, the rear wheel 7, the drive motor 8, a rear fender 44, an exhaust pipe 46.

The motorcycle 1 should preferably comprise at least one light reflector 49, for example fixed to the tail part 4, in particular to the rear fender 44.

The motorcycle 1 comprises at least a headlight 12 attached to the front part 2 and at least a taillight 14 attached to the tail part 4. In a situation wherein the steering handlebar 22 is not rotated, i.e. in the condition wherein both the front wheel 6 and the rear wheel 7 are aligned along the longitudinal axis L-L, the front headlight 12 is such as to emit a beam of light predominantly directed along the longitudinal axis L-L to illuminate a portion of the ground located in front of the motorcycle 1. The taillight 14 is such that it emits diffuse, i.e. nondirectional, optical radiation.

The saddle riding type vehicle 1 further comprises a system for reducing a collision risk, also called a collision avoidance system, which is mounted on the main body 2,3,4 and comprising at least one active radar reflector 50. The aforesaid collision avoidance system is mounted on the main body 2,3,4 directly or indirectly, e.g. mounted on a support frame of the main body 2,3,4, or on a portion of the chassis of the main body 2,3,4, or on a luggage rack or other accessory attached to the main body 2,3,4 of the motorcycle 1. In an advantageous embodiment, the active radar reflector 50 is integrated into a light reflector 49 of the motorcycle 1 or into a lighting device such as the headlight 12 and/or taillight 14.

According to a particularly advantageous embodiment, said at least one active radar reflector 50 comprises a rear active radar reflector 50 mounted on the tail part 4 and/or a front active radar reflector 50 mounted on the front part 2. In a further embodiment not shown in the figures, in addition to or as an alternative to the rear active radar reflector 50 and/or the front active radar reflector 50, the collision avoidance system may include one or more side active radar reflectors, e.g. mounted on the sides of the motorcycle 1 and oriented transversely to the longitudinal axis L-L.

In the particular non-limiting embodiment shown in the accompanying figures, the collision risk reduction system comprises a first active radar reflector 50 integrated in a light reflector 49 fixed on the tail part 4 of the motorcycle 1 and a second active radar reflector 50 fixed on the front shield 21 of the front part of the motorcycle 1.

Advantageously, the active radar reflector 50 comprises at least one amplifier 54,55 and is adapted and configured for:
- receiving an incident radar radiation and converting it into a corresponding detected electrical signal;
- processing the detected electrical signal with said at least one amplifier 54,55 to amplify it electronically and to obtain a processed electrical signal;
- obtaining and back-transmitting a response radar radiation from said processed electrical signal.

The aforesaid response radar radiation represents a radar return signal or a so-called radar echo signal produced by the active radar reflector 50.

The aforesaid incident radar radiation is emitted by an onboard radar system of another vehicle preceding or following the motorcycle 1. This onboard radar system is preferably an FMCW automotive radar. Preferably, the incident radar radiation is a radio frequency radiation in the 76-81 GHz band, or in the 76-77GHz band.

In accordance with a particularly advantageous embodiment, the aforementioned amplifier 54,55 has an electrically controllable, i.e. adjustable, gain. For example, this amplifier 54,55 is a VCA - Voltage Controlled Amplifier.

Although the gain adjustment may be both static and dynamic (and in the latter case it may also be a real-time adjustment), in accordance with a currently preferred embodiment the gain adjustment is static, e.g. set once and for all according to the specific vehicle (e.g. depending on the make and model), so that once certain boundary conditions have been established (such as, for example, direction of arrival and beam aperture of the incident radiation), by virtue of the collision avoidance system, such vehicle has a desired equivalent radar cross section.

According to an alternative embodiment, the gain adjustment is carried out dynamically, e.g. according to an attitude parameter of the motorcycle 1, e.g. according to an angle of tilt and/or steering of the motorcycle 1. This parameter may, for example, be detected by a gravitational accelerometer, provided on board the motorcycle 1 and/or integrated into the collision avoidance system.

In accordance with an advantageous embodiment, the active radar reflector 50 is a retro-directive radar reflector.

In accordance with an advantageous embodiment, the active radar reflector 50 is adapted and configured to modulate the detected electrical signal. This allows one to mitigate advantageously the effect of possible delays introduced in the amplification thereof and/or to encode in such a signal, and therefore in the response radar signal, information usable by the automotive radar system which produced the incident radiation, in order to increase the cooperation between the aforesaid collision avoidance system and the aforementioned automotive radar system. According to an advantageous embodiment, the aforesaid modulation is a frequency modulation.

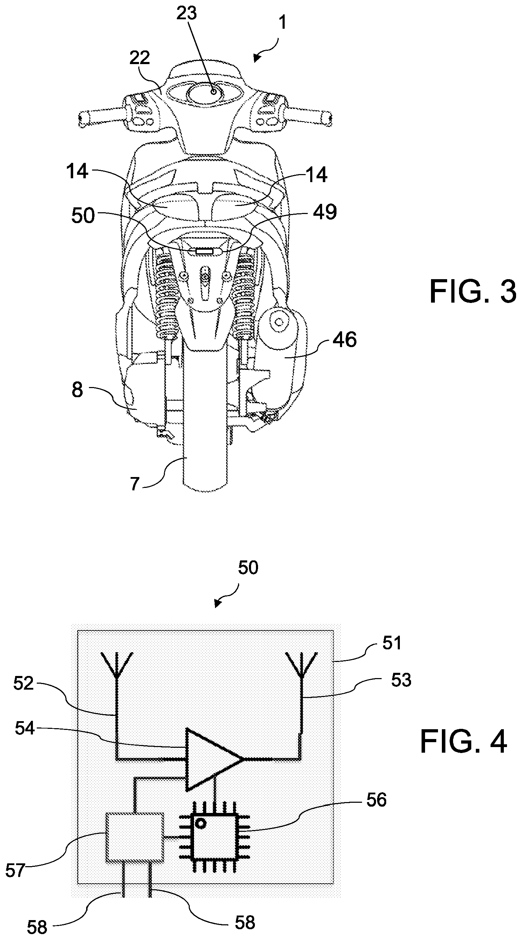

With reference to Figures 4 to 7, four non-limiting embodiments of the aforesaid active radar reflector 50 will be described below.

With reference to Figure 4, in an embodiment that is the first in order of constructive simplicity, the active radar reflector 50 comprises an array antenna system 52,53 and an electronic amplifier 54, for example a voltage controllable gain amplifier (VCA). The array antenna system 52,53 comprises, for example, a receiving array antenna 52 and an transmitting array antenna 53. Each array antenna 52, 53 comprises a plurality of antenna elements, e.g. a plurality of patch antenna elements integrated on a printed circuit board 51.

According to an embodiment, the receiving array antenna and the transmitting array antenna comprise a bidimensional matrix of antenna elements (e.g. patch elements) sized and arranged in such a way as to generate a receiving and transmitting beam having:
- an aperture in the range of 45°-15° in elevation, for example equal to 30°;
- an aperture in the range of 160°-120° in azimuth, for example equal to 140°.

In accordance with a particularly advantageous embodiment, the electrical signal detected by the receiving array antenna 52 is directly amplified analogically by the electronic amplifier 54 and fed to the transmitting array antenna 53 to be transmitted back, i.e. to be retroreflected. "Directly amplified" means that no frequency downconversion is provided for, such as, for example, an IF - Intermediate Frequency - conversion, in the processing of the detected electrical signal. This does not exclude the possibility that one or more frequency filters, such as one or more analog filters integrated or external to the analog electronic amplifier 54, may be provided. In other words, "directly amplified" means that the detected electrical signal is amplified in radar band.

Also with reference to Figure 4, in this embodiment the collision avoidance system comprises a control device 56, for example a microcontroller, operatively connected to the electronic amplifier 54, for example in order to adjust, in a static or dynamic way, the gain of the electronic amplifier 54.

Again, with reference to Figure 4, the active radar reflector 50 preferably comprises a power supply module 57 adapted and configured to supply power to the electronic amplifier 54 and to the control device 56, if any. For example, the power supply device 57 is, or comprises, a voltage regulator which is in turn powered by a battery, e.g. a battery of the motorcycle 1 to which the voltage regulator is connected, e.g. via electrical cables 58.

Again with reference to Figure 4, although the receiving array antenna 52 has been represented as an entity separate from the transmitting array antenna 53, it is also possible to provide for an alternative embodiment wherein the two antennas 52,53, share all or part of the same antenna elements, for example, by using antenna elements that, due to the provision of appropriate components such as switches and/or isolators, are both receiving and transmitting modules (so-called "RX/TX" modules).

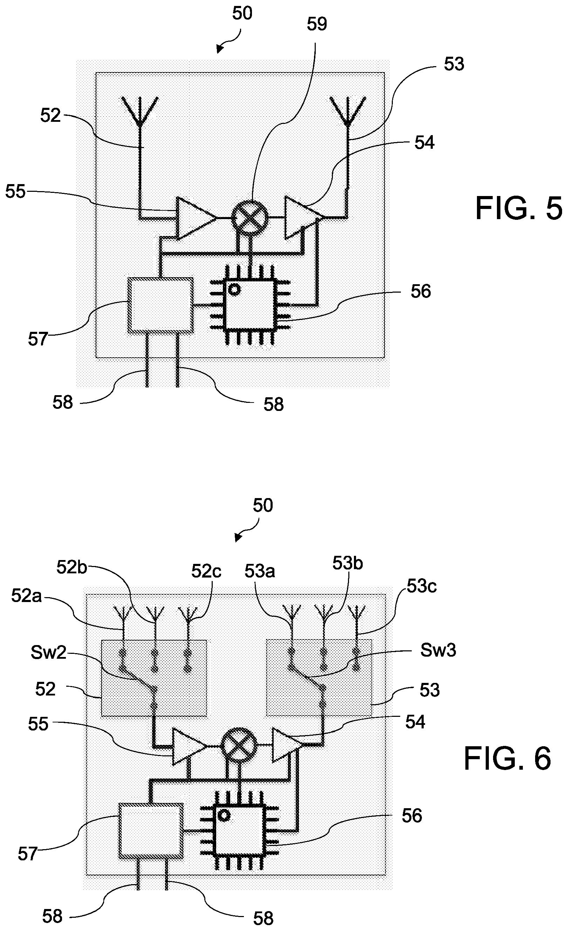

The embodiment of the active radar reflector 50 represented in Figure 5 differs from the embodiment described previously with reference to Figure 4 essentially in that in this case the electrical signal detected by the receiving array antenna 52, before being retroreflected by the transmitting array antenna 53, in addition to being amplified, is modulated; for this reason the active radar reflector 50 comprises in this case a signal modulator 59. Preferably, the signal modulator 59 is a frequency modulator and for example in this case is, or comprises, a radio frequency mixer.

Preferably, the signal modulator 59 allows the electrical signal detected to be modulated in order to compensate for any delays introduced by electronic components on board the active radar reflector 50 (especially those introduced by the amplifier 54) and/or to encode in the electrical signal detected information intelligible by the onboard radar system of the vehicle that emitted the incident radar radiation. Such information is for example: type and/or make and/or model of the motorcycle 1 on which the active radar reflector 50 is installed and/or information on the status of the motorcycle 1 such as, for example, information on the activation of the braking system and/or the switching on of the emergency lights, etc.

In the embodiment of Figure 5, the control device 56, in addition to controlling the gain of the amplifier 54, is operatively connected to the signal modulator 59 in order to control the modulation of the electrical signal detected.

Finally, in the embodiment of Figure 5, an additional amplifier 55 is advantageously provided, for example an LNA (Low Noise Amplifier), in order to compensate for the insertion loss of the signal modulator 59. In this case, the amplifier 55 acts as a preamplifier and the amplifier 54 acts as a booster. The signal modulator 59, for example the mixer 59, is operatively arranged between the preamplifier 55 and the booster 54.

In the embodiment of Figure 6, the active radar reflector 50 differs from the reflector described above with reference to Figure 5 in that the receiving array antenna 52 is suitable and configured to generate in sequence a plurality of reception beams having spatial diversity between them, so as to vary cyclically over time the azimuthal orientation of the reception beams. By virtue of this device, it is possible to obtain more directional reception beams, with benefits in terms of received power per angular sector. The same considerations apply to the transmitting array antenna 53. Moreover, according to a particularly advantageous embodiment, the azimuthal scanning of the receiving beams may be synchronized with the azimuthal scanning of the transmission beams.

In order to generate in sequence reception and/or transmission beams with spatial diversity and to vary cyclically the azimuthal orientation of the reception and/or transmission beams, in accordance with an advantageous embodiment, the receiving array antenna 52 and/or the transmitting array antenna 53 comprise a plurality of subarrays 52a, 52b, 52c and 53a, 53b, 53c which may be activated and deactivated sequentially through a switching system Sw2, Sw3. This switching system comprises, for example, an electronically controllable multi-way selector or a plurality of electronically controllable switches. In both cases, the electronic command required to obtain azimuthal scanning, i.e. the sequential activation and deactivation of the subarrays, may be carried out, for example, by the control device 56.

Within the same transmitting and/or receiving array antenna, each of the aforesaid subarrays 52a, 52b, 52c and 53a, 53b, 53c is adapted and configured to generate a receiving and/or transmitting beam oriented along a respective pointing direction. In order to achieve this, a person skilled in the art of antennas knows how to design and/or arrange the subarrays, thus this aspect will not be described in more detail except for the fact that within the same transmitting and/or receiving array antenna the various subarrays may be coplanar with each other or may lie on different planes or on a non-planar surface.

Again with reference to the embodiment of Figure 6, it should be noted that providing for the generation of multiple reception and/or transmission beams in order to vary the azimuthal orientation is applicable also to the embodiment described above with reference to Figure 4, i.e., the embodiment wherein no modulation of the electrical signal detected is provided.

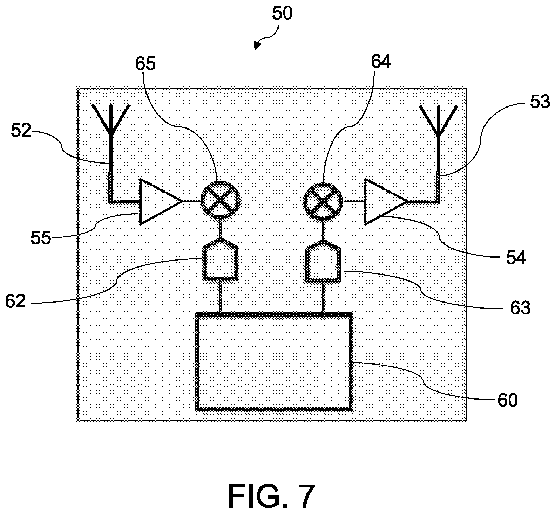

With reference to Figure 7, another embodiment of active radar reflector 50 is shown, which differs radically from the embodiments described previously in that the electrical signal detected before being transmitted back, i.e. retroreflected, is converted into a digital signal via an analog/digital converter 62 operatively connected to the receiving array antenna 52, processed by a digital signal processing block 60 in order to obtain a processed digital signal, then converted back into an analog signal and retransmitted through the transmitting array antenna 53. This architecture allows information intelligible by the vehicle's onboard radar system that produced the incident radiation to be encoded in the reflected signal and represents a complex alternative to the analog architecture of the active radar reflector 50 described above with reference to Figure 5. In order to perform an analog-to-digital conversion and then a digital-to-analog conversion, it is expedient to provide a low-band or intermediate frequency conversion before the analog-to-digital conversion, for example by means of a frequency downconversion mixer 65, and a high-frequency conversion into a radar band after the digital-to-analog conversion, for example by means of a frequency upconversion mixer 63.

It should be noted that all the embodiments described above, where they do not present mutual incompatibilities, may be combined without particular difficulty for a person skilled in the art. For example, the azimuthal scanning of the receiving and/or transmitting beam described with reference to the embodiment in Figure 6 may also be applied to the embodiment described above with reference to Figure 7.

Finally, it should be noted that, regardless of whether the transmitting and/or receiving antenna is characterized by a single relatively wide transmission and/or reception beam or by a plurality of relatively narrower and more adjustable beams, it is possible to foresee that the active radar reflector 50 comprises a transmitting and/or receiving antenna suitable for pointing in a pointing direction and a system for electronically adjusting the pointing direction based on at least one measurement of the tilt of the main body 2,3,4 of the motorcycle 1, for example so as to maintain said aiming direction substantially parallel to the ground when the motorcycle 1 is in use. For example, the system for electronically adjusting the pointing direction is adapted and configured to move a platform on which said antenna is mounted.

On the basis of what has been explained above, it is therefore possible to understand how a saddle riding type vehicle 1 of the type described above may achieve the objects mentioned above with reference to the state of the art. In effect, by virtue of a collision avoidance system described above it is possible advantageously to increase the radar visibility of the motorcycle 1 as a radar target, i.e., to increase the equivalent radar cross section thereof, in order to reduce the risk of the motorcycle 1 being involved in a collision with another vehicle equipped with automotive radar which, in an operating condition and during operation, approaches the motorcycle 1.

One should note that this collision avoidance system may already be provided installed in new vehicles, either by default or as an option, or as an accessory to be installed later, for example as a customization accessory.

It is possible, moreover, to provide for the collision avoidance system to be supplied already coupled to a component of the vehicle, such as a rear reflector or a taillight or a headlight, so as to provide a component that already comprises at the outset an anti-collision system integrated thereto.

In a preferred embodiment, the active radar reflector 50 is configured to adapt the reception and retransmission antenna beam in feedback to a vehicle signal that contains attitude data of the same, vehicle signal that is repeated moment by moment and therefore is provided in real time as a function of the change in position of the vehicle while driving. In particular, the vehicle signal comprises data relating to a measurement of the tilt of the main body 2,3,4 of the vehicle.

In particular, a set of pre-configured antennas in different directions is provided, selectable by a switch which is controlled on the basis of the input information received as a function of the change in position of the vehicle while driving. In this way, the antenna beam may be adapted to the dynamics of the vehicle.

In a different embodiment, the antenna beam may be adapted by creating an electronic beamforming through appropriate phase-shifters once again controlled according to external information, i.e., depending on the change in position of the vehicle while driving.

In combination with an active radar reflector 50, an active radar 50' for vehicle detection is also provided. The active radar 50' (Figures 1 and 2) is configured to adapt the transmission and reception antenna beam in feedback to attitude information received in real time from the motorcycle, in particular a signal from the inertial platform inherent to a tilt data of said main body 2,3,4.

The aforesaid radars 50,50', i.e. the active radar reflector 50 and the active radar 50' may be combined into an integrated system.

This integrated system may be configured according to a first operating mode, according to which the active radar reflector 50 is configured to adapt the reception and retransmission antenna beam based on information on targets and/or surrounding vehicles provided in real time by the active radar 50'.

In a second operating mode, on the other hand, the integrated system is configured in such a way that the active radar reflector 50 and the active radar 50' are both able to adapt the antenna beams according to the attitude information of the vehicle 1. Moreover, in this second operating mode, the active radar reflector 50 further adapts its beams based on information on targets and/or surrounding vehicles provided in real time by the active radar 50'.

In combination with the radar detection systems, an optical device, such as, for example, a camera, may be provided. The camera in combination with the radar(s) 50,50' is configured to locate surrounding vehicles.

The radar system is also preferably associated with a display element 23, for example integrated in the handlebar 22 of the vehicle, which emits a visual and/or audible signal in feedback to the identification of a surrounding vehicle present in an area close to the motorcycle itself; a nearby area which defines for example a minimum safety distance parameter for the driver in order to avoid possible collisions or accidents. In particular, this visual element is an indicator light 23 (Figure 3).

Without altering the principle of the invention, the embodiments and the details of implementation may vary widely with respect to those described and illustrated purely by way of non-limiting example, without thereby departing from the scope of the invention as defined in the accompanying claims.

## Claims

1. A saddle riding type vehicle (1) comprising:
- a main body (2,3,4) extending along a longitudinal axis (L-L) and having a front part (2), a tail part (4) and a central part (3) interposed between the front part and the tail part (4);
- at least one front wheel (6) and at least one rear wheel (7);
- a motor (8) operatively connected to at least one of said wheels (6,7); wherein the saddle riding type vehicle (1) further comprises a system mounted on the main body (2,3,4) for reducing a collision risk and comprising at least one active radar reflector (50), **characterised in that** said active radar reflector (50) comprises at least one antenna adapted to be pointed along a pointing direction and a system for electronically adjusting said pointing direction based on at least one tilt measurement of said main body (2,3,4).

2. A saddle riding type vehicle (1) according to claim 1, wherein said active radar reflector (50) comprises at least one amplifier (54,55) and is adapted and configured for:
- receiving an incident radar radiation and converting it into a corresponding detected electrical signal;
- processing said detected electrical signal with said amplifier for electronically amplifying it and obtaining a processed electrical signal;
- obtaining and back-transmitting a response radar radiation from said processed electrical signal.

3. A saddle riding type vehicle (1) according to claim 1 or 2, wherein said incident radar radiation is transmitted by an onboard radar system of another vehicle preceding or following said saddle riding type vehicle (1).

4. A saddle riding type vehicle (1) according to claims 2 or 3, wherein said active radar reflector (50) is adapted and configured for modulating said detected electrical signal.

5. A saddle riding type vehicle (1) according to any one of claims 2 to 4, wherein said amplifier (54,55) has an electronically controllable gain.

6. A saddle riding type vehicle (1) according to any one of the preceding claims, wherein said active radar reflector (50) is a retro-directive radar reflector.

7. A saddle riding type vehicle (1) according to any one of the preceding claims, wherein said at least one active radar reflector (50) comprises an active rear radar reflector mounted on said tail part (4) and/or an active front radar reflector mounted on said front part (2).

8. A saddle riding type vehicle (1) according to any one of the preceding claims, wherein said vehicle (1) comprises at least a light reflector (49) and/or a lighting device (12,14) and wherein said active radar reflector (50) is integrated in said light reflector (49) and/or a lighting device (12,14).

9. A saddle riding type vehicle (1) according to claim 1, wherein the system for electronically adjusting said pointing direction is adapted and configured to move a platform on which said antenna is mounted.

10. A saddle riding type vehicle (1) according to claim 2, wherein said amplifier (54,55) is adapted and configured for electronically amplifying in radar band said detected electric signal.

11. A saddle riding type vehicle (1) according to any one of the preceding claims, wherein said saddle riding type vehicle (1) is a motorcycle, in particular, a scooter.

12. A saddle riding type vehicle (1) according to claim 2, wherein said amplifier (54,55) is adapted and configured for electronically amplifying in radar band said detected electric signal.

13. A saddle riding type vehicle (1) according to any one of the preceding claims, wherein said active radar reflector (50) is configured to adapt the reception and retransmission antenna beam in feedback to attitude information received in real time from the vehicle, in particular to said at least one tilt measurement of the main body (2,3,4).

14. A saddle riding type vehicle (1) according to any one of the preceding claims, wherein an active radar (50') is provided for the detection of vehicles and wherein said active radar (50') is preferably configured to adapt the transmission and reception antenna beam in feedback to attitude information received in real time from the vehicle (1), in particular to at least one tilt measurement of said main body (2,3,4).

15. A saddle riding type vehicle (1) according to claim 14, wherein:
- there is an integrated system that comprises said active radar reflector (50) and said active radar (50'), wherein said active radar reflector (50) is configured to adapt the reception and retransmission antenna beam based on information on targets and/or surrounding vehicles provided in real time by said active radar (50');
- said integrated system comprising said active radar reflector (50) and said active radar (50') is preferably configured in such a way that said active radar reflector (50) and said active radar (50') are both able to adapt the antenna beams based on attitude information of the vehicle (1) and said active radar reflector (50) further adapts its beams on the basis of information on targets and/or surrounding vehicles provided in real time by said active radar (50').

## Patentansprüche

1. Sattelfahrzeug (1), umfassend:
- eine Hauptkarosserie (2,3,4), die sich entlang einer Längsachse (L-L) erstreckt und ein Vorderteil (2), ein Heckteil (4) und ein Mittelteil (3) aufweist, das sich zwischen dem Vorderteil und dem Heckteil (4) befindet;
- mindestens ein Vorderrad (6) und mindestens ein Hinterrad (7);
- einen Motor (8), der mit mindestens einem der Räder (6,7) wirkverbunden ist;
- wobei das Sattelfahrzeug (1) ferner ein System umfasst, das an der Hauptkarosserie (2,3,4) angebracht ist, um ein Kollisionsrisiko zu verringern, und mindestens einen aktiven Radarreflektor (50) umfasst, **dadurch gekennzeichnet, dass** der aktive Radarreflektor (50) mindestens eine Antenne umfasst, die geeignet ist, entlang einer Zeigerichtung ausgerichtet zu werden, und ein System zum elektronischen Einstellen der Zeigerichtung auf Basis mindestens einer Neigungsmessung der Hauptkarosserie (2,3,4).

2. Sattelfahrzeug (1) nach Anspruch 1, wobei der aktive Radarreflektor (50) mindestens einen Verstärker (54,55) umfasst und geeignet und konfiguriert ist zum:
- Empfangen einer einfallenden Radarstrahlung und Umwandeln derselben in ein entsprechendes erfasstes elektrisches Signal;
- Verarbeiten des erfassten elektrischen Signals mit dem Verstärker, um es elektronisch zu verstärken und ein verarbeitetes elektrisches Signal zu erhalten;
- Erhalten und Rücksenden einer Antwortradarstrahlung anhand des verarbeiteten elektrischen Signals.

3. Sattelfahrzeug (1) nach Anspruch 1 oder 2, wobei die einfallende Radarstrahlung von einem Bordradarsystem eines anderen Fahrzeugs gesendet wird, das dem Sattelfahrzeug (1) vorausfährt oder folgt.

4. Sattelfahrzeug (1) nach Anspruch 2 oder 3, wobei der aktive Radarreflektor (50) geeignet und konfiguriert ist, um das erfasste elektrische Signal zu modulieren.

5. Sattelfahrzeug (1) nach einem der Ansprüche 2 bis 4, wobei der Verstärker (54,55) eine elektronisch steuerbare Verstärkung hat.

6. Sattelfahrzeug (1) nach einem der vorhergehenden Ansprüche, wobei der aktive Radarreflektor (50) ein rückstrahlender Radarreflektor ist.

7. Sattelfahrzeug (1) nach einem der vorhergehenden Ansprüche, wobei der mindestens eine aktive Radarreflektor (50) einen aktiven hinteren Radarreflektor, der an dem Heckteil (4) angebracht ist, und/oder einen aktiven vorderen Radarreflektor, der an dem Vorderteil (2) angebracht ist, umfasst.

8. Sattelfahrzeug (1) nach einem der vorhergehenden Ansprüche, wobei das Fahrzeug (1) mindestens einen Lichtreflektor (49) und/oder eine Beleuchtungsvorrichtung (12,14) umfasst und wobei der aktive Radarreflektor (50) in den Lichtreflektor (49) und/oder eine Beleuchtungsvorrichtung (12,14) integriert ist.

9. Sattelfahrzeug (1) nach Anspruch 1, wobei das System zum elektronischen Einstellen der Zeigerichtung geeignet und konfiguriert ist, um eine Plattform zu bewegen, auf der die Antenne angebracht ist.

10. Sattelfahrzeug (1) nach Anspruch 2, wobei der Verstärker (54,55) zum elektronischen Verstärken des erfassten elektrischen Signals im Radarband geeignet und konfiguriert ist.

11. Sattelfahrzeug (1) nach einem der vorhergehenden Ansprüche, wobei das Sattelfahrzeug (1) ein Motorrad, insbesondere ein Motorroller, ist.

12. Sattelfahrzeug (1) nach Anspruch 2, wobei der Verstärker (54,55) zum elektronischen Verstärken des erfassten elektrischen Signals im Radarband geeignet und konfiguriert ist.

13. Sattelfahrzeug (1) nach einem der vorhergehenden Ansprüche, wobei der aktive Radarreflektor (50) so konfiguriert ist, dass er den Empfangs- und Rückübertragungs-Antennenstrahl in Rückkopplung an Lageinformationen anpasst, die in Echtzeit von dem Fahrzeug empfangen werden, insbesondere an die mindestens eine Neigungsmessung der Hauptkarosserie (2,3,4).

14. Sattelfahrzeug (1) nach einem der vorangehenden Ansprüche, wobei ein aktives Radar (50') zum Erfassen von Fahrzeugen vorgesehen ist und wobei das aktive Radar (50') vorzugsweise so konfiguriert ist, dass es den Übertragungs- und Empfangs-Antennenstrahl in Rückkopplung an Lageinformationen anpasst, die in Echtzeit von dem Fahrzeug (1) empfangen werden, insbesondere an mindestens eine Neigungsmessung der Hauptkarosserie (2,3,4).

15. Sattelfahrzeug (1) nach Anspruch 14, wobei:
- es ein integriertes System gibt, das den aktiven Radarreflektor (50) und das aktive Radar (50') umfasst, wobei der aktive Radarreflektor (50) so konfiguriert ist, dass er den Empfangs- und Rückübertragungs-Antennenstrahl auf Basis von Informationen über Ziele und/oder umgebende Fahrzeuge anpasst, die in Echtzeit von dem aktiven Radar (50') bereitgestellt werden;
- das integrierte System, das den aktiven Radarreflektor (50) und das aktive Radar (50') umfasst, vorzugsweise so konfiguriert ist, dass der aktive Radarreflektor (50) und das aktive Radar (50') beide in der Lage sind, die Antennenstrahlen auf Basis von Lageinformationen des Fahrzeugs (1) anzupassen und der aktive Radarreflektor (50) seine Strahlen ferner auf Basis von Informationen über Ziele und/oder umgebende Fahrzeuge anpasst, die in Echtzeit von dem aktiven Radar (50') bereitgestellt werden.

## Revendications

1. Véhicule de type à selle (1) comprenant :
- une carrosserie principale (2,3,4) s'étendant le long d'un axe longitudinal (L-L) et ayant une partie avant (2), une partie arrière (4) et une partie centrale (3) interposée entre la partie avant et la partie arrière (4) ;
- au moins une roue avant (6) et au moins une roue arrière (7) ;
- un moteur (8) relié fonctionnellement à au moins l'une desdites roues (6,7) ;
- dans lequel le véhicule de type à selle (1) comprend en outre un système monté sur la carrosserie principale (2,3,4) pour réduire un risque de collision et comprenant au moins un réflecteur radar actif (50), **caractérisé en ce que** ledit réflecteur radar actif (50) comprend au moins une antenne adaptée pour être pointée selon une direction de pointage et un système de réglage électronique de ladite direction de pointage en fonction d'au moins une mesure d'inclinaison de ladite carrosserie principale (2,3,4).

2. Véhicule de type à selle (1) selon la revendication 1, dans lequel ledit réflecteur radar actif (50) comprend au moins un amplificateur (54,55) et est adapté et configuré pour :
- recevoir un rayonnement radar incident et le convertir en un signal électrique détecté correspondant ;
- traiter ledit signal électrique détecté avec ledit amplificateur pour l'amplifier électroniquement et obtenir un signal électrique traité ;
- obtenir et transmettre en retour un rayonnement radar de réponse à partir dudit signal électrique traité.

3. Véhicule de type à selle (1) selon la revendication 1 ou 2, dans lequel ledit rayonnement radar incident est transmis par un système radar embarqué d'un autre véhicule précédant ou suivant ledit véhicule de type à selle (1).

4. Véhicule de type à selle (1) selon les revendications 2 ou 3, dans lequel ledit réflecteur radar actif (50) est adapté et configuré pour moduler ledit signal électrique détecté.

5. Véhicule de type à selle (1) selon l'une quelconque des revendications 2 à 4, dans lequel ledit amplificateur (54,55) a un gain pouvant être commandé électroniquement.

6. Véhicule de type à selle (1) selon l'une quelconque des revendications précédentes, dans lequel ledit réflecteur radar actif (50) est un réflecteur radar rétrodirectif.

7. Véhicule de type à selle (1) selon l'une quelconque des revendications précédentes, dans lequel ledit au moins un réflecteur radar actif (50) comprend un réflecteur radar arrière actif monté sur ladite partie arrière (4) et/ou un réflecteur radar avant actif monté sur ladite partie avant (2).

8. Véhicule de type à selle (1) selon l'une quelconque des revendications précédentes, dans lequel ledit véhicule (1) comprend au moins un réflecteur de lumière (49) et/ou un dispositif d'éclairage (12,14) et dans lequel ledit réflecteur radar actif (50) est intégré dans ledit réflecteur de lumière (49) et/ou un dispositif d'éclairage (12,14).

9. Véhicule de type à selle (1) selon la revendication 1, dans lequel le système pour régler électroniquement ladite direction de pointage est adapté et configuré pour déplacer une plateforme sur laquelle ladite antenne est montée.

10. Véhicule de type à selle (1) selon la revendication 2, dans lequel ledit amplificateur (54,55) est adapté et configuré pour amplifier électroniquement dans la bande radar ledit signal électrique détecté.

11. Véhicule de type à selle (1) selon l'une quelconque des revendications précédentes, dans lequel ledit véhicule de type à selle (1) est une motocyclette, en particulier un scooter.

12. Véhicule de type à selle (1) selon la revendication 2, dans lequel ledit amplificateur (54,55) est adapté et configuré pour amplifier électroniquement dans la bande radar ledit signal électrique détecté.

13. Véhicule de type à selle (1) selon l'une quelconque des revendications précédentes, dans lequel ledit réflecteur radar actif (50) est configuré pour adapter le faisceau d'antenne de réception et de retransmission en réaction aux informations d'attitude reçues en temps réel du véhicule, en particulier à ladite au moins une mesure d'inclinaison de la carrosserie principale (2,3,4).

14. Véhicule de type à selle (1) selon l'une quelconque des revendications précédentes, dans lequel un radar actif (50') est prévu pour la détection de véhicules et dans lequel ledit radar actif (50') est de préférence configuré pour adapter le faisceau d'antenne de transmission et de réception en réaction aux informations d'attitude reçues en temps réel du véhicule (1), en particulier à au moins une mesure d'inclinaison de ladite carrosserie principale (2,3,4).

15. Véhicule de type à selle (1) selon la revendication 14, dans lequel :
- il existe un système intégré qui comprend ledit réflecteur radar actif (50) et ledit radar actif (50'), dans lequel ledit réflecteur radar actif (50) est configuré pour adapter le faisceau d'antenne de réception et de retransmission sur la base d'informations sur les cibles et/ou les véhicules adjacents fournies en temps réel par ledit radar actif (50') ;
- ledit système intégré comprenant ledit réflecteur radar actif (50) et ledit radar actif (50') est de préférence configuré de telle manière que ledit réflecteur radar actif (50) et ledit radar actif (50') soient tous deux en mesure d'adapter les faisceaux d'antenne sur la base d'informations d'attitude du véhicule (1) et ledit réflecteur radar actif (50) adapte en outre ses faisceaux sur la base d'informations sur des cibles et/ou des véhicules adjacents fournies en temps réel par ledit radar actif (50').
